Europäisches Patentamt

European Patent Office

Office européen des brevets

(19)

(11) Veröffentlichungsnummer: **0 207 503**
A1

(12) **EUROPÄISCHE PATENTANMELDUNG**

(21) Anmeldenummer: 86108974.6

(22) Anmeldetag: 02.07.86

(51) Int. Cl.⁴: **A 01 G 9/00**
**E 04 D 11/00**

(30) Priorität: 05.07.85 CH 2924/85

(43) Veröffentlichungstag der Anmeldung:
07.01.87 Patentblatt 87/2

(84) Benannte Vertragsstaaten:
AT BE CH DE FR GB IT LI LU NL SE

(71) Anmelder: Gartenbau-Genossenschaft Zürich
Im Holzerhurd 56
CH-8046 Zürich(CH)

(72) Erfinder: Eriksson, Bengt Christofer
Asylstrasse 70
CH-8032 Zürich(CH)

(74) Vertreter: Scheidegger, Zwicky, Werner & Co.
Stampfenbachstrasse 48 Postfach
CH-8023 Zürich(CH)

(54) Formstück für gartenbautechnische Verwendung.

(57) Zum Begrünen einer vegetationsfreien Fläche, z.B. auf einem Flachdach, ist auf eine wasserdichte Unterlage (7) ein Rost (1) aufgelegt, der aus im Abstand parallel zueinander angeordneten und lagenweise übereinander sich kreuzenden lattenförmigen Körpern (2,4) besteht. Die lattenförmigen Körper (2,4) bestehen aus natürlichem organischen Material, vorzugsweise aus Holzfasermaterial, das Feuchtigkeit zurückhält und eine Vegetationsunterlage bildet. Dadurch kann auf dem auf die lattenförmigen Körper (2,4) aufgebrachten Sandgemisch Pflanzenwuchs (6) gedeihen.

Fig. 3

EP 0 207 503 A1

1

## Formstück für gartenbautechnische Verwendung

Um eine keinen Erdboden aufweisende,
im wesentlichen ebene Fläche wie beispielsweise
ein Flachdach zu begrünen, kann man sich verschiedener
Methoden bedienen, um eine zum Ansäen oder Pflanzen
geeignete Unterlage zu schaffen. Dazu muss auf
das Flachdach zunächst eine wasserdichte Schicht
etwa aus Kunststoffmaterial oder Asphalt aufgebracht
werden, die dann mit Sand oder Erdreich in der
zum Ansäen erdorderlichen Schichtstärke bedeckt
wird. Die erheblichen Schwierigkeiten bei dieser
Methode bestehen darin, dass das durch Regen oder
aus der Leitung zugeführte, für den Wuchs erforderliche Wasser sehr schnell abläuft, bzw. auch der
Sand oder das Erdreich weggespült wird, weil keine
Bewehrung vorhanden ist, die den Sand oder das
Erdreich festhält. Damit also Pflanzenwuchs auf
einer dafür eigentlich ungeeigneten Fläche sich
entwickeln kann, sind die dafür zu schaffenden
Voraussetzungen eine ausreichende Feuchtigkeit,
die im Wurzelbereich der Pflanzen festgehalten
werden muss, und das Zusammenhalten des das Pflanzenbett bildenden Materials wie Sand oder Boden, damit
dieses nicht durch Wind oder Wasser weggetragen
wird, bevor die Wurzeln der grösser werdenden Pflanzen
die Aufgabe des Festhaltens übernehmen können.
Die Aufgabe der vorliegenden Erfindung
bestand darin, diese Voraussetzungen mit einfachen
Mitteln in wirkungsvollster Weise zu schaffen.
Die Aufgabe wird durch die Massnahmen nach Anspruch
1 gelöst.

In vorteilhafter Weise bildet das Formstück
aus natürlichem organischen Material, das Feuchtigkeit
zurückhält, als Vegetationsunterlage dient und
allmählich verrottet, einen aus lattenförmigen
Formpresskörpern hergestellten Rost, der aus in
übereinanderliegenden Lagen sich kreuzenden
Formpresskörpern besteht, wobei als Material vorzugsweise ein auf der Basis von Holz hergestelltes
Produkt wie z.B. der unter der Bezeichnung Pavatex
erhältliche Holzwerkstoff verwendet wird. Es kommen
aber auch andere die gleichen Eigenschaften aufweisende natürliche organische Materialien wie pflanzliche
Fasern in Frage, aus denen sich mit Bindemitteln formstabile Körper herstellen lassen. Auch kann für das
Formstück eine andere geeignete Formgebung gewählt
werden, die die gleichen Vorteile erreichen lässt,
die bei der vorgenannten Verwendung des Formstücks
darin bestehen, dass die Feuchtigkeit festgehalten
wird, eine Vegetationsunterlage vorhanden ist und
eine Bewehrung für das den Pflanzenwurzeln Halt
bietende Schüttmaterial geschaffen ist.

Die Erfindung wird nachfolgend anhand
der in den Zeichnungen dargestellten Ausführungsbeispiele näher erläutert. Es zeigen:

Fig. 1 eine Draufsicht auf das als Rost
ausgebildete Formstück;

Fig. 2 eine Seitenansicht des Rostes
gemäss Fig. 1;

Fig. 3 das Formstück gemäss Fig. 1 als
Vegetationsunterlage für Pflanzenwuchs auf dem
als Rost ausgebildeten Formstück;

Fig. 4 eine Draufsicht auf das Formstück
in Form einer Holzfaserplatte;

Fig. 5 eine Seitenansicht des Formstücks
gemäss Fig. 4.

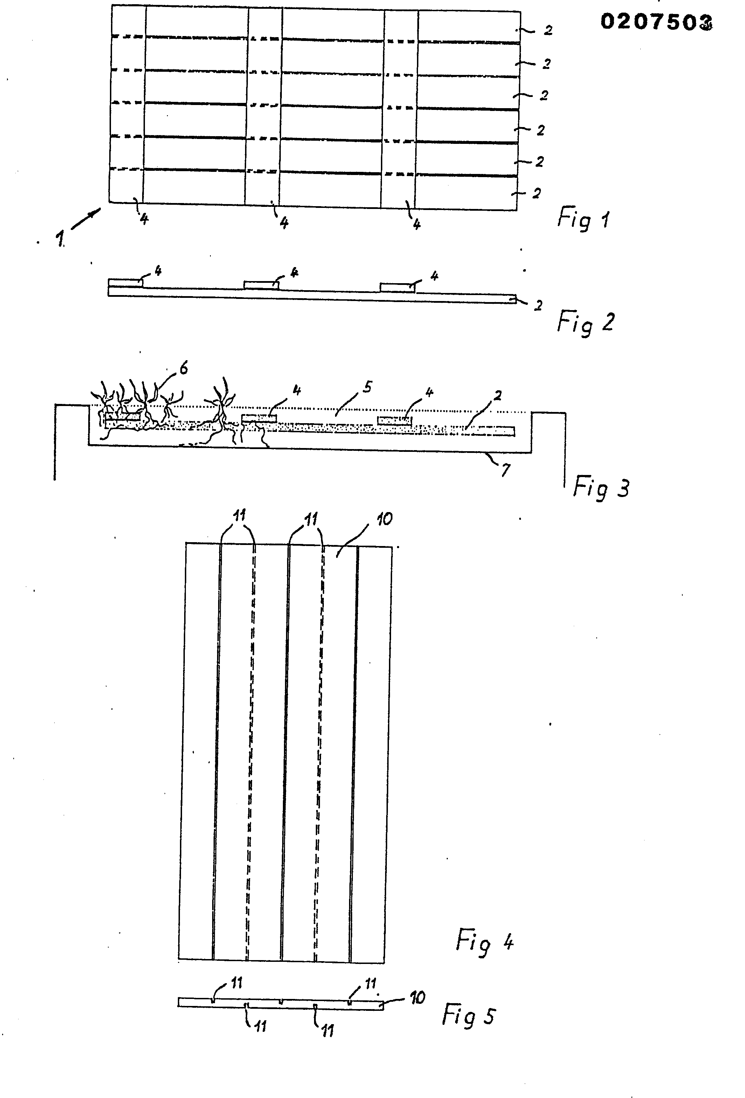

Gemäss Fig. 1 und 2 ist das Formstück als
Rost 1 ausgebildet, der in einer unteren Lage eine
Anzahl im Abstand parallel zueinander angeordneter
lattenförmiger Körper 2 sowie in einer weiteren Lage
über den letzteren eine Anzahl parallel zueinander angeordneter und quer zu den Körpern 2 der ersten Lage
verlaufender Körper 4 umfasst, die aus dem gleichen
natürlichen organischen Material bestehen wie die
lattenförmigen Körper 2. Für die Körper 2 und 4 sind
streifenförmige Abschnitte von Holzfaserplatten verwendet, deren Material die für diesen Anwendungsfall
gewünschte Eigenschaft hat, Feuchtigkeit zurückhalten,
so dass eine Vegetationsunterlage gebildet wird, auf
der Pflanzenwuchs gedeihen kann. Das Material verrottet allmählich, was für den Pflanzenwuchs noch
förderlich ist. Der Rost 1 ist in eine Sand enthaltende Erdschicht 5 eingebettet, der Düngemittel beigemischt ist, wie aus Fig. 3 hervorgeht, so dass Gras 6
oder eine andere Pflanzenart angesät oder gepflanzt
werden kann und den ganzen Rost 1 überdeckt. In dieser
Weise kann ein mit einer wassrdichten Unterlage versehenes Flachdach 7 begrünt werden.

Wie bereits erwähnt, sollen die im Hinblick auf eine Flächenbegrünung eingesetzten Formstücke mit der Zeit verrotten. Dafür sorgt das Grundmaterial, aus dem die Formstücke aufgebaut sind, nämlich das natürliche organische Fasermaterial. Obwohl
dieses Material für den angestrebten Wasserrückhalt
sorgt, sollte darauf geachtet werden, dass kein übermässiger Wasserstau (stehendes Wasser) erfolgt, da
sonst das Material nicht verrottet, sondern verfault,
was zu vermeiden ist. Dies bedeutet, dass für eine
ausreichende Flächenentwässerung gesorgt werden muss.
Dies kann durch Anbringen der Formstücke auf einer
Drainageunterlage erfolgen, wobei sich dazu besonders
sog. Drainagematten empfehlen, welche vorzugsweise an ihrer Oberseite mit einer Filterschicht versehen werden (verhindern das Abfliessen der Erdschicht und der verrotteten Bestandteile der Formstücke). Derartige Drainagematten sind bekannt und im Handel erhältlich.

Bei dem in den Fig. 1 bis 3 dagestellten Ausführungsbeispiel bestehen die lattenförmigen Körper 2 und 4 aus auf der Basis von Holz hergestellten Fasermaterialkörpern, die auf Grund ihres Materials in besonderer Weise Feuchtigkeit zurückhalten und eine Vegetationsunterlage bilden können.

Die lattenförmigen Körper 2 können in bevorzugter Weise noch mit einem geeigneten Düngergemisch imprägniert sein. Dadurch steht Dünger für den Pflanzenwuchs zur Verfügung und ausserdem wird der mikrobiologische Prozess bei der Verrottung beschleunigt.

Die Gestalt des Formstücks ist natürlich nicht auf eine rechteckförmige Umrissform beschränkt, vielmehr kann diese auch beliebig anders ausgebildet sein, beispielsweise können bei einer spitzwinklig oder stumpfwinklig begrenzten Fläche, die begrünt werden soll, die lattenförmigen Körper des zur Fläche passend ausgebildeten Rostes unter einem spitzen oder stumpfen Winkel zueinander verlaufen.

Eine bevorzugte einfache Ausführungsform des Formstücks ist in Fig. 4 und 5 dargestellt. Bei dieser Ausführungsform ist eine Holzfaserplatte 10 an mindestens einer Seite oder vorzugsweise an der Oberseite und an der Unterseite mit in Längsrichtung parallel zueinander und im Abstand voneinander verlaufenden Rillen 11 versehen, wobei die Rillen 11 an der Unterseite jeweils auf der Abstandsmitte zwischen den Rillen 11 an der Oberseite ausgebildet sind. Bei einer abgewandelten Ausführungsform sind vorzugsweise die Rillen 11 an der Unterseite rechtwinklig zu den Rillen 11 an der Oberseite angeordnet, um dem Verbiegen der Platte 10 unter dem Einfluss der Feuchtigkeit zu begegnen.

Nachstehend wird die Verwendung von erfindungsgemässen Formstücken anhand eines Beispiels einer extensiven Dachbegrünung noch etwas näher erläutert:

Bezüglich der Tragfähigkeit einer Dachkonstruktion sei erwähnt, dass das Gewicht einer 5 cm starken Kiesschicht, die zum Schutz der Isolation heute normalerweise eingebracht wird, im wassergesättigten Zustand ca. 100 kg/m2 beträgt. Man kann also davon ausgehen, dass eine unter Verwendung erfindungsgemässer Formstücke ausgeführte Extensivbegrünung deren Gewicht diesen Wert nicht übersteigt, praktisch auf allen vorkommenden Flachdächern realisierbar ist.

Extensivbegrünung 80 mm wassergesättigt ca. 92 kg/m2
Extensivbegrünung 60 mm wassergesättigt ca. 67 kg/m2

Die Hersteller von Dachdichtungen aus Kunststoff geben in der Regel eine Garantie für Wurzelbeständigkeit. Bitumgebundene Dachdichtungen müssen meistens noch mit einer Wurzelschutzfolie gesichert werden. Ein zusätzlicher mechanischer Schutz der Dachhaut bzw. der Wurzelschutzfolie ist je nach Situation in Erwägung zu ziehen. Gewisse Ausführungen von Drainagematten bieten zugleich einen mechanischen Schutz.

Auch bei einer Extensivbegrünung muss für eine ausreichende Flächenentwässerung gesorgt sein. Normalerweise sind sog. Drainagematten zu empfehlen, wobei zu beachten ist, dass die Dachkonstruktion ebenflächig ist. Unebenheiten mit stehendem Wasser, tiefer als die Dicke der Drainagematte, sollten mit Tongranulat wie Leca 3-10 mm aufgeschiftet werden.

Bereiche mit wesentlichen konstruktiven Nahtstellen
wie Dachränder, Wandanschlüsse, Abläufe usw. sollten
in einer Breite von ca. 50 cm frei von Vegetation
bleiben. Diese Flächen können mit Rundkies aufgefüllt
und untereinander verbunden werden. Besonders auf der
Wetterseite von hohen Fassaden muss mit grossen Niederschlagsmengen gerechnet werden. Der Einbau von
höhenverstellbaren Entwässerungsrinnen oder flexiblen
Drainageröhren erhöht die Abflussgeschwindigkeit. Als
Drainagematten mit aufgeklebtem Filter können beispielsweise die unter nachstehenden Handelsnamen erhältlichen Produkte verwendet werden:

"Delta-MS-Drain", Dörken AG, 4008 Basel, Stärke 10 mm
"Goperl-blau", Rollfilter, Kunststoffwerk AG,
  8226 Schleitheim, Stärke 50 mm
"Enkadrain", Schöllkopf & Co. AG, 8057 Zürich,
  Stärke 20 mm
"Nora" Drainagebahn, E. Braendle AG, 8305 Dietlikon,
  Stärke 30 mm

Bei der Verwendung von Drainagematten ohne
aufgeklebte Filtermatte sollte ein Geotextil als
Trennung zwischen der Vegetationsschicht und der
Drainageschicht eingebaut werden.

Die eigentliche Vegetationsschicht besteht
beim geschilderten Aufbau aus erfindungsgemässen
Faserplatten, die mit einem geeigneten Erdsubstrat
überdeckt werden. Dieser Aufbau bietet eine sehr
grosse Wasserspeicherfähigkeit mit Erhaltung einer
optimalen Wasserdurchlässigkeit.

Ein geeignetes Erdsubstrat kann nach der
folgenden Rezeptur hergestellt werden:

15 Vol.% Landerde bzw. Kulturerde mit
folgenden Qualitätsmerkmalen:

Bodenart:          sandiger bis schwach sandiger
Lehm

Korngrössenbereich
und Struktur:        Erdmaterial mit einer maximalen
Korngrösse von 10 mm und einer
"krümeligen" Struktur

Humusgehalt:       humoser Boden
(dunkel gefärbter Boden)

pH-Wert:          schwach sauer bis leicht alkalisch (pH 6,0 bis 7,5)

50 Vol.% Lavasand der Korngrössenklasse 0 bis 4 mm
10 Vol.% gewaschener Sand der Korngrössenklasse 0 - 4 mm
25 Vol.% Weisstorf (Ballentorf)

Die Erde-Sand-Torfmischung ist wie folgt aufzudüngen:

1,0 kg/m3 Hornmehl fein        N 13
1,0 kg/m3 Hornspäne mittelfein   N 13
2,0 kg/m3 Thomasmehl          P 18
1,0 kg/m3 Patentkali          K 26 + 6,5 Mg
0,2 kg/m3 "MICROMAX" Spurelementmischung
        der Firma Hauert & Co., Grossaffoltern

Ein entsprechendes einbaufertiges Erdsubstrat, in Säcken mit 25 l Inhalt kann bei der
Firma Ricoter Erdaufbereitung AG, 3270 Aarberg, bezogen werden.

Bei Extensivbegrünung werden selbstregenerierende Pflanzengemeinschaften angestrebt. Stauden, Gräser und Kleingehölze aus Trockenrasen- und
Felsspaltengesellschaften sind geeignet. Die Pflanzen
können angesät, gepflanzt oder als Sprossteile ausgestreut werden. Auf jeden Fall ist eine standortgerechte
Begrünung anzustreben. Pflanzen, Moose und Flechten

8

die sich im Laufe der Zeit ansiedeln sind erwünscht.
Grössere Pflanzen können, wo es die Belastbarkeit des
Daches erlaubt, auf kleinere, lokal aufgebaute
Hügelgebilde gepflanzt werden.

Als Grundbegrünung eignen sich Samenmischungen für trockene Standorte.

1

Patentansprüche

1. Formstück für gartenbautechnische Verwendung, dadurch gekennzeichnet, dass es grösstenteils aus natürlichem organischen und zum Zurückhalten von Feuchtigkeit geeignetem Material als formstabiler Körper (2,4,10) hergestellt ist und als verrotungsfähige Vegetationsunterlage für Pflanzenwuchs dient.

2. Formstück nach Anspruch 1, dadurch gekennzeichnet, dass es ein mindestens einstückiger aus natürlichem organischen Material bestehender Formpresskörper (2,4,10) aus Fasermaterial, insbesondere ein Holzfaserkörper, ist.

3. Formstück nach Anspruch 2, dadurch gekennzeichnet, dass es einen Rost (1) aus im Abstand parallel zueinander und lagenweise übereinander winklig sich kreuzend angeordneten und miteinander verbundenen lattenförmigen Körpern (2,4) bildet, von denen jene mindestens einer der übereinander angeordneten Lagen aus natürlichem organischen Material hergestellte Formpresskörper (2,4) sind.

4. Formstück nach Anspruch 2, dadurch gekennzeichnet, dass es aus einer Holzfaserplatte (40) besteht, die an der Oberseite und an der Unterseite mit in Längsrichtung parallel oder kreuzweise zueinander und im Abstand voneinander verlaufenden Nuten, Rillen oder Schlitzen (11) versehen ist.

5. Formstück nach Anspruch 3, dadurch gekennzeichnet, dass die lattenförmigen Körper (2) des Rostes (1) mit einer geeigneten Düngermischung imprägniert sind.

6. Verwendung des Formstückes als Vegetationsunterlage für Pflanzenwuchs, dadurch gekennzeichnet, dass es in eine mit vegetationsfördernden Substanzen gemischte Erdschicht eingebettet und von dieser überdeckt ist.

7. Verwendung nach Anspruch 6, dadurch gekennzeichnet, dass die Erdschicht Sand enthält und der Schicht mindestens im oberen Teil Humus beigemischt ist.

8. Verwendung nach Anspruch 6 oder 7, dadurch gekennzeichnet, dass die Formstücke auf einer Drainageunterlage angeordnet sind.

9. Verwendung nach Anspruch 8, dadurch gekennzeichnet, dass die Drainageunterlage von einer auf der Oberseite gegebenenfalls mit einer Filterschicht, z.B. einem Filtervlies ausgerüsteten Drainagematte gebildet ist.

Fig 1

Fig 2

Fig 3

Fig 4

Fig 5

0207503

0207503

Nummer der Anmeldung

EP 86 10 8974

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | AT-B- 341 163 (EBENSEER BETONWERKE) * Seite 2, Zeilen 19-40; Seite 3, Zeilen 6-9, Anspruch 4 * | 1 | A 01 G 9/00 E 04 D 11/00 |
| A | | 3,5,6 | |
| | --- | | |
| X | DE-A-3 045 390 (ZINK) * Seite 9, Absatz 2 - Seite 12, Absatz 1; Seite 13, Zeilen 5,6; Figuren 1,2,4 * | 1,2,4 | |
| | --- | | |
| X | GB-A-2 052 234 (KARLHOLMS) * Insgesamt * | 1,2 | |
| | --- | | |
| A | CA-A-1 187 306 (SARTOR) * Seite 14, Zeile 1 - Seite 15, Zeile 23; Figur 7 * | 8,9 | RECHERCHIERTE SACHGEBIETE (Int Cl 4) |
| | ----- | | A 01 G A 01 C E 04 D E 01 F |

Der vorliegende Recherchenbericht wurde für alle Patentansprüche erstellt.

| Recherchenort | Abschlußdatum der Recherche | Prüfer |
|---|---|---|
| DEN HAAG | 13-10-1986 | HERYGERS J.J. |